# EUROPÄISCHE PATENTANMELDUNG

(11) **EP 4 005 952 A1**
(43) Veröffentlichungstag der Anmeldung: **01.06.2022**
(21) Anmeldenummer: 20210452.7
(22) Anmeldetag: 27.11.2020
(51) Int. Cl.: B65G 47/14, B65G 47/248

(54) **PROFILVEREINZELNER**

(71) Anmelder: Stefan Pfaff Werkzeug- und Formenbau GmbH & Co. KG, 88167 Röthenbach (DE)
(72) Erfinder: SUTTER, Anton, 88178 Simmerberg (DE); REINERS, Alexander, 41372 Niederkrüchten (DE)
(74) Vertreter: Otten, Roth, Dobler & Partner mbB Patentanwälte

(57) **Zusammenfassung**

Vorgeschlagen wird eine weitergehende Automatisierung in Form eines Profilvereinzelners (1) zum Vereinzeln von Profilen (P), umfassend: eine erste Fördervorrichtung (3) zur Zuführung der Profile (P) im ungeordneten Zustand über eine erste Förderstrecke (4), eine Förderwalze (5) zum Auftrennen der Menge an zugeführten Profilen (P) in einzelne Profile (P), wobei die Förderwalze (5) in Transportrichtung (T1) der ersten Fördervorrichtung (3) nachgeschaltet ist. Die Profile (P) können biegeschlaff, flexibel oder semiflexible sein; ferner können sie einen Carrier aufweisen oder nicht.

## Beschreibung

Die Erfindung betrifft einen Profilvereinzelner zum Vereinzeln von Profilen, insbesondere von biegeschlaffen, flexiblen oder semiflexiblen Profilen, jeweils mit oder ohne Carrier.

Soweit es aus dem Stand der Technik bekannt ist, beruhen die herkömmliche Fertigungslogistik und das Handling von Profilen, vor allem von biegeschlaffer Profile, die als Kunststoffspritzteile zum Beispiel typischerweise für Tür und Fensterdichtungen von Kraftfahrzeugen eingesetzt werden, weitgehend auf einem manuellen Vereinzeln und Positionieren der biegeschlaffen Profile. Nach dem ersten Herstellungsschritt, der Extrusion werden die auf diese Weise erhaltenen Profilrohlinge üblicherweise in einer Box gesammelt und in der Box zur nächsten Bearbeitungsstation gebracht. Dort werden die Profile von einer Bedienperson einzeln aus der Box entnommen und zum Beispiel in einer Form positioniert, sodass anschließend maschinell der nächste Bearbeitungsschritt durchgeführt werden kann (zum Beispiel ein Anspritzvorgang an das Profil, ein Beschneidevorgang des Profils oder dergleichen). Je nach Situation können die Profile unterschiedlich in der Box liegen. In der Regel wird nicht zu erwarten sein, dass sich die Profile nach dieser herkömmlichen Verfahrensweise aus dem Stand der Technik in geordnetem Zustand in der Box befinden, sondern sie können auch in einander verheddert sein. Die Bedienperson muss also bislang, je nach Zustand der Profile in der Box, die Profile entwirren, um sie einzeln entnehmen, für die nächste

Bearbeitungsstation bereitstellen und z.B. positionsgenau in eine Form einlegen zu können.

Aufgabe der Erfindung ist es, die Kosten bei der Fertigung derartiger Profile verringern zu können.

Die Aufgabe wird, ausgehend vom bisherigen Stand der Technik, durch die Merkmale des Anspruchs 1 gelöst.

Durch die in den abhängigen Ansprüchen genannten Maßnahmen sind vorteilhafte Ausführungen und Weiterbildung der Erfindung möglich.

Um eine entsprechende Kostenreduzierung bei der Fertigung zu ermöglichen, ist es erfindungsgemäß vorgesehen, den Automatisierungsgrad bei der Fertigung zu erhöhen. Auf diese Weise kann gemäß der Erfindung nicht nur Personal eingespart werden, sondern auch der für die Fertigung benötigte Raum kann reduziert werden, da für den vorgeschlagenen Profilvereinzelner im Allgemeinen weniger Platz bereitgestellt werden muss als für einen Arbeitsplatz. Stattdessen kann das Handling des Profils durch einen Roboter folgen.

Um dies zu erreichen, wird erfindungsgemäß ein Profilvereinzelner zum Vereinzeln der Profile zur Verfügung gestellt. Die Erfindung beseitigt damit das technische Vorurteil, dass aufgrund der biegeschlaffen mechanischen Eigenschaften solcher Profile und aufgrund des Umstands, dass diese ungeordnet sich ineinander verhaken können, ein automatisiertes Handling unzuverlässig bzw. erst gar nicht möglich ist. Die Erfindung kann aber auch grundsätzlich für das Handling von Profilen verwendet werden, die eine etwas höhere Steifigkeit aufweisen als biegeschlaffe Profile. Zum Beispiel kann der erfindungsgemäße Profilvereinzelner auch für flexible oder semiflexible Profile verwendet werden. Zuweilen werden in die Profile auch sogenannte Carrier eingesetzt, die das Handling erleichtern sollen, indem sie die Steifigkeit des Profils erhöhen. Der Profilvereinzelner gem. der Erfindung kann entsprechend auch für derartige Profile mit und ohne Carrier eingesetzt werden.

Der erfindungsgemäße Profilvereinzelner umfasst zunächst eine erste Fördervorrichtung zur Zuführung der Profile, die aus einem Vorrat an Profilen, die im Allgemeinen in einem ungeordneten Zustand vorliegen, entnommen werden. Die erste Fördervorrichtung transportiert die Profile über eine erste Transportstrecke. Zum Vereinzeln ist der ersten Fördervorrichtung eine Förderwalze (auch als Abzugswalze bezeichnet) nachgeschaltet, d.h. die erste Fördervorrichtung führt die Profile der Förderwalze zu. Die Förderwalze ändert die Transportbewegung der Profile, was zum Auftrennen der Menge an zugeführten Profilen in einzelne Profile führen kann.

Bei einer Ausführungsform kann die Förderwalze z.B. eine zur ersten Fördervorrichtung unterschiedliche Oberfläche aufweisen und somit unterschiedliche Reibungseigenschaften bzw. eine unterschiedliche Haftreibung zur ersten Fördervorrichtung besitzen. Eine unterschiedliche Oberfläche kann auf verschiedene Weisen realisiert werden:
- Zum einen können für die Oberflächen unterschiedliche Materialien gewählt werden.
- Zum anderen kann die Oberflächenstruktur bzw. das Oberflächenprofil anders gewählt werden.
- Denkbar ist auch, dass zum Transport eine eigene Vorrichtung wie ein Kratzboden in einem der Fälle gewählt wird.

Sobald die Profile über die erste Fördervorrichtung zur Förderwalze gelangen, werden einzelne davon, je nach Lage, aufgrund der unterschiedlichen Reibungsverhältnisse weggezogen bzw. aus einer Menge an Profilen herausgezogen, während andere Profile erst hierzu von der Förderwalze weggezogen werden. In bevorzugter Weise kann bei einer Ausführungsform die Förderwalze an ihrer Oberfläche eine zur Fördergeschwindigkeit der ersten Fördervorrichtung unterschiedliche Bahngeschwindigkeit aufweisen. Insbesondere dann, wenn die Fördergeschwindigkeit der ersten Fördervorrichtung langsamer ist als die Bahngeschwindigkeit an der Oberfläche der Förderwalze, kann die Förderwalze ein einzelnes Profil, auch aus einer Menge an Profilen, herausziehen, sobald eine hinreichend große Haftung des Profils an der Walze vorliegt. Das Aussondern des Profils aus einer Menge an Profilen wird durch die höhere Bahngeschwindigkeit der Förderwalze begünstigt, das Profil kann leichter aus der restlichen Menge auf von deren Trägheit herausgezogen werden.

Insofern kann es auch vorteilhaft sein, wenn die Förderwalze eine zur ersten Fördervorrichtung unterschiedliche Reibung aufweist, weil auch der Zeitpunkt, bei dem die Haftreibung an der Förderwalze ausreicht, um ein Profil herauszuziehen zu können, oftmals nicht bereits dann erreicht ist, wenn das Profil über die erste Fördervorrichtung mit der Förderwalze gerade in Kontakt kommt, sondern erst, wenn die Walze hinreichend Kontaktfläche zum Profil besitzt.

Bei einer Weiterbildung der Erfindung kann die Förderwalze zum Beispiel eine mit Zähnen versehene Oberfläche aufweisen. Beispielsweise kann es sich dabei um eine wallartige Erhebung in der Oberfläche handeln, die entlang der Drehachse der Förderwalze verläuft. Grundsätzlich erleichtern die Zähne, dass ein Profil von der Förderwalze mitgerissen wird, weil damit die Oberfläche, an der ein Profil haften kann, vergrößert wird oder typischerweise Lamellen des Profils darin einhaken können.

Darüber hinaus kann die Förderwalze auch eine glatte Oberfläche aufweisen, und zwar grundsätzlich auch dann, wenn die Förderwalze mit Zähnen versehen ist. Dies bedeutet, dass auch bei der Ausbildung mit Zähnen Kanten vermieden werden und ein glatter Übergang auch über die Zahnstruktur hinweg vorgesehen ist. Würde die Haftreibung der Oberfläche der Förderwalze gegenüber den Profilen zu groß gewählt, könnten viele Profile auf einmal mitgerissen werden, sobald die Profile am Ende der ersten Förderstrecke mit der Förderwalze in Kontakt kommen; ein solcher Effekt würde der Vereinzelung entgegenwirken. Denkbar sind im Allgemeinen Ausführungsbeispiele mit glatter Oberfläche der Förderwalze, aber ohne Zähne, jedoch grundsätzlich auch mit Zähnen und ohne glatte Oberfläche. Diese Auswahl hängt auch stark von der Beschaffenheit der Profile ab (Form und Größe der Profile sowie Kunststoffoberflächeneigenschaften der Profile, die auch lackiert sein können).

Grundsätzlich ist das Vereinzeln der Profile durch die Förderwalze schwieriger, wenn größere Mengen an Profilen auf einmal sich auf die Walze zu bewegen, insbesondere, wenn die Profile zumindest teilweise übereinanderliegen, aufgehäuft sind oder ineinander verhaken. Dies kann dazu führen, dass ein am Boden der Förderstrecke liegendes Profil zusammen mit weiteren, darüber befindlichen Profilen zusammen mitgerissen wird, weil sich diese auf dem unteren Profil abstützen. Daher kann es bei einer vorteilhaften Ausführungsform der Erfindung hilfreich sein, wenn die erste Förderstrecke gekippt bzw. mit einstellbaren Winkel verkippbar ausgebildet ist. Insbesondere dann, wenn die erste Förderstrecke in Transportrichtung ansteigt, können einzelne Profile während des Transports z.B. von einem Stapel aus mehreren Profilen herunterfallen bzw. es ist aus der Menge insgesamt schwerer bzw. unwahrscheinlicher, dass mehrere, übereinandergestapelte Profile zur Förderwalze gelangen. Dies liegt daran, dass die Profile zur Walze hin transportiert und gegebenenfalls auch zur Förderwalze hin beschleunigt werden.
Eine Teilkomponente der Schwerkraft wirkt aber somit in einer Richtung von der Förderwalze weg. Auch durch die Trägheit bedingt können gestapelte Profile bei Beschleunigung des unten liegenden Profils durch die erste Fördervorrichtung von der Förderwalze weg bewegt werden. Auf diese Weise kann eine zuverlässigere Vereinzelung erfolgen.

Die Vereinzelung kann über die Transportstrecke, welche die Profile durchlaufen, aufgeteilt werden. Hierbei kann bereits die erste Fördervorrichtung einen Teil der Vereinzelung übernehmen. Je weniger Profile grundsätzlich zum gleichen Zeitpunkt zur Förderwalze gelangen, desto höher ist die Wahrscheinlichkeit einer effektiven Vereinzelung der Profile.

Bei einer besonders vorteilhaften Ausführungsform der Erfindung kann die erste Fördervorrichtung als Kratzboden ausgebildet sein. Ein Kratzboden besteht zunächst aus einem Boden der Förderstrecke, auf denen die Profile liegen. Auf dem Boden befindet sich mindestens eine bewegliche, leiterartige Struktur, die aus einer Anordnung von Mitnehmerleisten besteht. Diese Mitnehmerleisten können an den Rändern jeweils von einer Kette geführt werden. Die Kette ist am Rand jeweils durch Eingriff in Taschenräder gelagert und wird durch deren Drehung angetrieben. Alternativ dazu kann der Antrieb aber z.B. auch über einen Zahnriemen (anstelle einer Kette), der über ein Zahnriemenrad angetrieben wird, erfolgen. Bei einer Drehung der Taschenräder wird die Kette angetrieben, und die Mitnehmerleisten werden über den Boden bewegt, sodass loses Schüttgut, hier die entsprechenden Profile von den jeweiligen Mitnehmerleisten mitgenommen und über die Förderstrecke transportiert werden kann. Die Oberflächenbeschaffenheit des Bodens und der Mitnehmerleisten können auf die Kunststoffprofile eingestellt sein, sodass eine einfache Mitnahme gewährleistet sein kann. Beispielsweise können der Boden oder die Mitnehmerleisten jeweils aus Edelstahl bzw. Messing gefertigt sein.

Um mögliche Reibungseffekte zu vermeiden, können unterschiedliche Materialien für Mitnehmerleisten und Boden verwendet werden. Grundsätzlich kann auch der Abstand, mit dem die Mitnehmerleisten über den Boden bewegt werden, veränderlich sein. Je größere Abstände der Mitnehmerleisten zum Boden vorliegen, desto höher liegt der Angriffspunkt, an dem eine Kraft auf die Profile ausgeübt wird. Der Angriffspunkt kann also auf die Höhe des Schwerpunkts der Profile gebracht werden, sodass eine Translationsbewegung eher zustande kommt als eine Drehbewegung der Profile. Andererseits wiederum sollte der Abstand zwischen Boden und mit Nehmerleiste nicht so groß sein, dass die Profile in den Zwischenspalten eingeklemmt werden können und dann verkratzten oder den Transport blockieren.

Denkbar ist auch, dass die erste Fördervorrichtung als Förderband ausgebildet ist. Ein Kratzboden kann grundsätzlich erleichtern, dass einzelne Profile mitgenommen werden, da der Kontakt zu den Mitnehmerleisten an sich die Transportkraft bewirkt und nicht der gesamte Boden, wie dies beim Förderband der Fall ist, bewegt wird. Im Einzelnen kann dies von der Wahl der Profile und deren Eigenschaften und Material jedoch abhängen. In der Regel kann durch einen Kratzboden in vorteilhafter Weise eine Vorvereinzelung zustande kommen.

Bei einem weiteren Ausführungsbeispiel der Erfindung kann der Förderwalze eine Fallstrecke nachgeschaltet sein. Hierdurch kann insbesondere die Vereinzelung begünstigt sein, da einzelne Profile über die Fallstrecke sich sehr schnell von den nachfolgenden wegbewegen. Stattdessen oder zusätzlich kann auch eine Rutsche vorgesehen sein. Gegenüber einer Fallstrecke kann die Rutsche wiederum eine Bremswirkung auf die Profile ausüben, die zuvor durch den Fall beschleunigt wurden. Grundsätzlich kann eine Rutsche auch so ausgebildet sein, dass die vereinzelten oder vor-vereinzelnten Profile zunächst stark beschleunigt werden, um größeren Abstand zu den nachfolgenden Profilen zu erlangen. Die Rutsche kann grundsätzlich auch in zwei Bereiche mit unterschiedlicher Reibungswirkung auf die sich darüber hinweg bewegenden Profile besitzen, sodass die Profile zum Beispiel zunächst beschleunigt und ihr Fall dann abgebremst wird. Gegebenenfalls kann eine solche Wirkung auch durch ein variables Gefälle der Rutsche erreicht werden.

Um den Profilvereinzelner möglichst kompakt zu gestalten, kann insbesondere nach der Förderwalze die Transportrichtung umgekehrt werden.

Um ferner einen Profilstau zu vermeiden, kann eine zweite Fördervorrichtung der Rutsche nachgeschaltet sein und die Profile über eine zweite Förderstrecke bewegen. Auch diese Fördervorrichtung bzw. Förderstrecke kann grundsätzlich gekippt bzw. mit einstellbaren Winkel ausgebildet werden. Der Weg kann wiederum in Transportrichtung ansteigen, sodass ebenfalls hierdurch die Vereinzelung noch einmal begünstigt wird. Insbesondere ermöglicht dies, dass Profile erst mit hinreichendem Kontakt zur zweiten Fördervorrichtung weitertransportiert werden, während gerade ankommende Profile noch nicht auf die Fördervorrichtung gelangen, sodass kein ungewollter Stau erfolgt, der die bereits erfolgte Vereinzelung wieder entgegenwirkt. Grundsätzlich können bei einer verkippten zweiten Förderstrecke die gleichen Vorteile wie bei der ersten erreicht werden, also die Vereinzelung unterstützt wird.

Im Allgemeinen kann es vorkommen, dass zum Beispiel zwei oder mehrere Profile bereits im Bereich der Förderwalze übereinanderliegen und somit zusammen über die Fallstrecke bzw. die Rutsche nach unten gelangen. Um den Vereinzelungsgrad zu erhöhen und z.B. übereinanderliegende Profile weiter auszusondern, kann eine Barrierevorrichtung vorgesehen sein. Diese kann beispielsweise im Bereich der zweiten Förderstrecke, gegebenenfalls auch im Übergang von der Rutsche zur zweiten Förderstrecke angeordnet werden. Es kann sich anbieten, eine derartige Barrierevorrichtung als mechanischen Widerstand auszugestalten, insbesondere in Form einer Durchlassöffnung. Eine reine Durchlassöffnung in Form eines Tores kann jedoch den Nachteil besitzen, dass einzelne Profile sich darin verhaken und hängen bleiben der Transport somit behindert wird. In vorteilhafter Weise kann stattdessen eine sich bewegende Barrierevorrichtung vorgesehen werden, die ein Verhaken der Profile und eine Blockade des Transports unwahrscheinlicher machen.

Bei einer Weiterbildung der Erfindung kann als Barrierevorrichtung z.B. eine Abzieh- oder Bremsrolle vorgesehen sein, die entweder drehbar so gelagert ist, dass sie sich im Kontakt mit Profilen mitdrehen kann, aber an einer festen Stelle montiert ist oder aber sie wird so gedreht, dass auf die Profile eine Kraft, insbesondere eine Scherkraft zwischen der Rolle und dem sich darunter befindlichen Förderband oder Kratzboden wirkt.

In vorteilhafter Weise kann auch bereits im Bereich der ersten Fördervorrichtung bzw. über der ersten Förderstrecke eine Barrierevorrichtung angeordnet sein. Hier besteht im Grunde die größte Wahrscheinlichkeit, dass mehrere zusammenhängende oder übereinanderliegen Profile auf einmal mittransportiert werden. Durch eine Barrierevorrichtung in Form einer Höhenbegrenzung können diese haufenartigen Anordnungen von Profilen jedoch auseinandergezogen werden.

Im Allgemeinen können solche Barrierevorrichtung dadurch ausgebildet sein, dass sie ein Rad umfassen, welches sich so dreht, dass der der Förderstraße zugewandte Abschnitt einen Geschwindigkeitsvektor entgegen der Fördervorrichtung zeigt. Dies führt zu Scherkräften, die auf etwaige Profilhaufen einwirken, sodass tendenziell die im bodenseitigen Bereich befindlichen Profile Förderrichtung weitertransportiert werden, während die im oberen Bereich befindlichen Profile in entgegengesetzter Richtung abgeschert werden. Auf diese Weise kann die Vereinzelung unterstützt werden.

Gegebenenfalls können die Profile in sehr komplexer Weise zusammenhängen. Grundsätzlich muss daher der Fall berücksichtigt werden, dass die Profile noch zusammenhängen und nicht vereinzelt werden konnten, wenn die zweite Förderstraße passiert wurde. Für diesen Fall ist bei einer vorteilhaften Weiterbildung der Erfindung eine Weiche der Fördervorrichtung nachgeschaltet, um je nachdem, ob die geförderten Profile vereinzelt gefördert bzw. vereinzelt über die zweite Förderstrecke angeliefert werden, die vereinzelten Profilen passieren zu lassen, zusammenhängende Konglomerate jedoch nicht. Darüber hinaus können aber auch noch Sonderfälle behandelt werden, z.B. kann die Orientierung der Profile geändert werden.

Eine derartige Erkennung, ob Profile vereinzelt wurden oder nicht, kann durch eine optische Sensorvorrichtung, eine Kamera oder dergleichen erzielt werden. Dabei kann auch eine Auswertevorrichtung mit künstlicher Intelligenz zum Einsatz kommen, die z.B. in der Lage ist, optische Merkmale zu erlernen, mit denen leichter erkannt wird, ob Profile zusammenhängen oder gestapelt vorliegen oder wie ein Profil auf der Förderstrecke ausgerichtet ist. Zudem kann über eine solche Sensorvorrichtung auch bestimmt werden, wie viele Profile pro Zeiteinheit einen Bereich der Förderstrecke passieren. Um z.B. durch eine Förderwalze den Vereinzelungsgrad zu erhöhen, ist es notwendig, dass nicht zu viele Profile auf einmal an der Förderwalze ankommen. Mit der Sensorvorrichtung kann daher auch die Geschwindigkeit einer Fördervorrichtung kontrolliert werden. Damit an einer Förderwalze nicht zu viele Profile auf einmal ankommen, kann die vorgelagerte Fördervorrichtung ihren Transport z.B. verlangsamen.

Bei einer Ausführungsform der Erfindung kann diese Weiche im Querschnitt als L-förmiges Profil ausgebildet sein, insbesondere als L-förmiges Metall-Blech-Profil, zum Beispiel aus Edelstahl. Aufgrund der L-Form besitzt dieses Profil eine glatte Rücken- bzw. Rutschfläche, über welche das Profil mit Hilfe der Schwerkraft entlang rutschen kann. Auf der gegenüberliegenden Seite ist sodann zu einer Seite des L-Profils hin abgewinkelt eine Auffanglasche bzw. -zarge zum Auffangen von Profilen vorgesehen. Die Weiche kann in diesem Fall dadurch gestellt werden, dass das L um eine Achse senkrecht zur Ebene, in der die L Form vorliegt, gelagert und je nach Ergebnis der Sensorvorrichtung sodann gedreht wird und die Profile, wie vorgesehen, vereinzelt, so können diese über die glatte Seite zu einem ersten Auffangbereich rutschen, in dem die vereinzelten Profile zum Beispiel von einem Greifer erfasst und zu einer Bearbeitungsstation gebracht werden können.

Sind die Profile vereinzelt worden, liegen jedoch in der falschen Ausrichtung, so ist ein Drehen über die Weiche möglich, indem diese zum Beispiel um 90° gegenüber der Position, in der die glatte Rutschfläche zur Verfügung steht gedreht werden. Das Profil kann sodann auf die Weiche prallen und durch die Auffangzarge aufgefangen werden. Durch weiteres Drehen der Weiche kann das Profil gewendet werden, sodass es nicht nur vereinzelt wurde, sondern auch in der richtigen Position liegt, um weiter von einem Greifer bzw. Roboter aufgefangen und weiterverarbeitet zu werden.

Sind mehrere Profile immer noch ineinander verhakt und eine Weiterverarbeitung nicht möglich, so kann die Weiche so gedreht werden, dass das Profil gegen die glatte Rutschfläche prallt und auf einem anderen Weg in einen zweiten Auffangbereich zum Aussondern gelangt. Zum Beispiel werden die Profile aus dem zweiten Auffangbereich erneut in den Profilvereinzelner gegeben oder auf andere Weise vereinzelt und weiterverarbeitet.

Darüber hinaus können Sensorvorrichtung in vorteilhafter Weise dazu genutzt werden, an beliebigen Stellen über die gesamte Wegstrecke, also über die erste und zweite Fördervorrichtung sowie dazwischen über den Bereich der Förderwalze, die Fallstrecke bzw. die Rutsche festzustellen, ob einzelne Profile ineinander verhakt sind oder ob zum Beispiel zu viele Profile auf einmal gefördert werden. Gegebenenfalls können Anpassungen der Fördergeschwindigkeiten, der Drehgeschwindigkeit der Förderwalze, Steigungen von Förderstrecken oder angepasst werden.

Der erste Auffangbereich kann ebenso ein L-förmiges Profil aufweisen, um die vereinzelten Profile aufzufangen. Diese Profile sind nicht nur vereinzelt, sondern auch so positioniert, dass die in definierter Weise von einem Roboter erfasst werden können. Von oben kann z.B. ein Greifarm eingeschwenkt werden, während von der entgegengesetzten Seite ein Klemmhebel um geklappt wird, sodass das vereinzelte Profil dazwischen gehalten wird. Der Greifer kann so ausgebildet sein, dass er in die Zwischenbereichen der Lamellen zum Beispiel eingreift und das Profil durch Abheben oder Verschwenken aus dem Aufnahmebereich hinausführt. Auf diese Weise besitzt das Profil auch die richtige Orientierung, um präzise in der nächsten Bearbeitungsstation positioniert werden zu können.

### Ausführungsbeispiele:

Ausführungsbeispiele der Erfindung werden in den Zeichnungen dargestellt und im Folgenden näher erläutert. Im Einzelnen zeigen:
- Fig. 1:: eine schematische Darstellung eines Profilvereinzelner gem. der Erfindung (Schnittdarstellung, perspektivisch),
- Fig. 2:: der Endbereich des Vereinzelners aus Fig. 1 in vergrößerter Darstellung, sowie
- Fig. 3: eine weitere Darstellung des Profilvereinzelners mit geschlossenem Gehäuse und mit zusätzlichem Schneidwerkzeug.

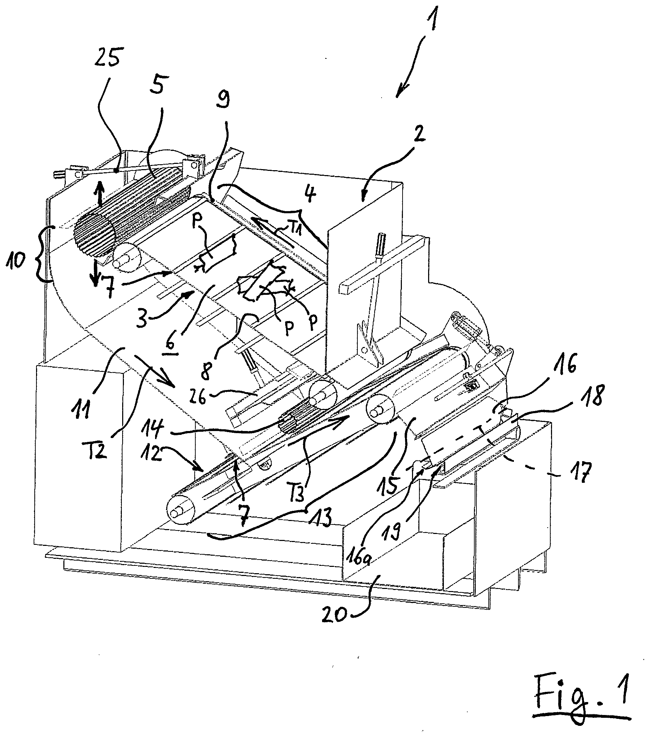

Figur 1 zeigt einen Profilvereinzelner 1 gem. der Erfindung, bei dem schematische eine seitliche Gehäusewandung geöffnet und ein Schnitt durch den Vereinzelner 1 gelegt ist. Das Ausgangsmaterial an Profilen P wird im Bereich 2 bevorratet und durch die erste Fördervorrichtung 3 über die erste Förderstrecke 4 zu einer Förderwalze 5 transportiert. Die erste Fördervorrichtung 3 umfasst einen Boden 6. Die Profile P werden mittels eines Kratzbodens 7 über die erste Förderstrecke 4 bewegt. Zudem diesem Zweck sind Mitnehmerleisten 8 des Kratzbodens 7 vorgesehen, die seitlich jeweils an einer Kette 9 befestigt sind und über den Boden 6, mit einer Ausrichtung senkrecht zur Förderrichtung bewegt werden können. Die Kette 9 wird typischerweise über einen Taschenradantrieb gezogen. Wie in Figur 1 zu sehen ist, ist die erste Förderstrecke 4 verkippt angeordnet, und zwar zur Förderwalze 5 hin bzw. in Transportrichtung T1 ansteigend. Auf diese Weise müssen die Profile P zumindest teilweise entgegen der Schwerkraft bewegt werden. Die Wahrscheinlich sinkt hiermit, dass Profilhaufen nach oben bewegt werden, da beim Beschleunigen über den Kratzboden 7 zunächst vor allem die unten liegenden Profile P eine Kraft erfahren, während in einer Anhäufung übereinanderliegender Profile P die oberen tendenziell aufgrund ihrer Trägheit eher in Schwerkraftrichtung zum Bevorratungsbereich 2 zurückfallen.

Die Förderwalze 5 besitzt eine Zahnstruktur mit glatter Oberfläche. In der Regel wird die Walze 5 so schnell gedreht, dass die Bahngeschwindigkeit eines Punktes an der Oberfläche größer ist als die Fördergeschwindigkeit der ersten Fördervorrichtung 3. Somit können einzelne Profile P gut von der Förderstrecke 4 gezogen und vereinzelt werden.

Damit die von der Förderwalze 5 erfassten und weggezogenen (vereinzelten) Profile P möglichst rasch weiterbefördert werden können, ist der Walze 5 unmittelbar eine kurze Fallstrecke 10 nachgeschaltet. Die Profile P fallen dabei auf eine Rutsche 11 mit Gefälle, welche den Fall der Profile P abfängt und etwas verlangsamt. Die Rutsche 11 ist so ausgerichtet, dass die Transportrichtung T2 gegenüber T1 der Profile P praktisch umgekehrt wird.

Am Ende der Rutsche 11 gelangen die Profile P auf die zweite Fördervorrichtung 12 mit der zweiten Förderstrecke 13. Auch diese sieht einen Kratzboden 7 vor. Die zweite Förderstrecke 13 verläuft wiederum ansteigend. Oberhalb der zweiten Förderstrecke 13 ist in einem vorgegebenen Abstand hierzu eine Barrierevorrichtung 14 vorgesehen, um Anhäufungen bzw. Konglomerate von Profilen gegebenenfalls auflösen und trennen zu können. Die Barrierevorrichtung 14 umfasst zu diesem Zweck ein Rad bzw. eine Abzieh- und Bremsrolle mit gezähnter Oberfläche, das in Figur 1 aus einer Perspektive auf die geöffnete Seite des Profilvereinzelners 1 im Uhrzeigersinn rotiert. In dem Punkt, welcher der Transportoberfläche der zweiten Förderstrecke 13 zugewandt ist, verläuft der Geschwindigkeitsvektor also der Förderrichtung T3 der zweiten Fördervorrichtung 12 entgegengesetzt. Gestapelte Profile P erfahren dadurch nicht nur eine mechanische Barriere in Form einer Zwangsbegrenzung der Höhe, sondern werden somit zudem noch verschert, da sich die Profile am Boden in Förderrichtung T3 und auf die höher über der Förderstrecke 13 gelegenen eine entgegengesetzte Kraft einwirkt. Dadurch kann der Vereinzelungsprozess verbessert werden.

Am Ende der zweiten Förderstrecke 13 fallen die Profile über eine kurze Rutsche 15 auf eine Weiche 16, welche ein L-Profil ("L" bzw. "gespiegeltes L") aufweist. Die Weiche 16 kann um die Drehachse 17 gedreht werden. In Figur 1 ist die Weiche 16 so gestellt, dass der glatte Rücken des L-Profils als Rutsche für die Profile im Anschluss an die Rutsche 15 dient.

Im Anschluss an die Weiche 16 wiederum liegt ein weites L-förmiges Profil als erster Auffangbereich 18, in den das vereinzelte Profil P rutscht. In dem L-Profil des ersten Auffangbereichs 18 ist ein Klemmhebel 19 angeordnet, der von unten her gegen das vereinzelte Profil P verschwenkt werden kann. Zusätzlich kann von oben ein Greifhebel (nicht dargestellt in den ersten Auffangbereich 18 geschwenkt werden. Das Profil P wird dazwischen geklemmt und aus dem ersten Auffangbereich 18 entnommen.

Die Weiche 16 um die Drehachse 17 aber auch (in Sicht auf die vordere, geöffnete Seite des Vereinzelners 1) um 90° entgegen dem Uhrzeigersinn gegenüber der Darstellung aus Figur 1 verschwenkt werden, sodass ein Profil P von der Rutsche 15 aus gegen die Weiche 16 prallt und von dort aus in den zweiten Auffangbereich 20 fällt. Diese Aufteilung wird genutzt um z.B. Profil-Konglomerate, die nicht aufgetrennt und vereinzelt werden konnten, auszusondern.

Die L-Form der Weiche 16 hat den Vorteil, dass mit Hilfe der Auffangzarge 16a ein Profil zunächst auch aufgefangen werden kann. Die Weiche 16 muss hierzu um 90° im Uhrzeigersinn um die Drehachse 17 (in Sicht auf die vordere, geöffnete Seite des Vereinzelners 1) gegenüber der Darstellung aus Figur 1 gedreht werden. Ein in falsch liegendes Profil P kann somit noch einmal gedreht werden: Es prallt gegen die Weiche 16 und wird von der Auffangzarge 16a aufgefangen. Dann wird die Weiche 16 weiter im Uhrzeigersinn um weitere 90° gedreht, sodass auch das aufgefangene Profil P gewendet und, korrekt ausgerichtet, in den ersten Auffangbereich 18 rutschen kann.

Die Förderwalze 5 ist hinsichtlich ihrer Position, insbesondere relativ zur ersten Fördervorrichtung 3 und/oder zur ersten Förderstrecke 4 verstellbar, also höhenverstellbar und/oder verschwenkbar; hierzu ist eine Einstellvorrichtung 25 vorgesehen. Durch eine solche Maßnahme kann der Vereinzelungsvorgang optimiert werden, weil je nach Position der Förderwalze 5 zur Förderstrecke 4 die Profile, die in Kontakt mit der Förderwalze 5 kommen, unterschiedliche Kräfte wirken können. Somit kann unter anderem eine Anpassung an unterschiedliche Profile vorgenommen werden.

Darüber hinaus kann auch die Position, insbesondere die Höhe der Abzieh- und Bremsrolle 14 (Barrierevorrichtung) in Bezug auf die zweite Förderstrecke 13 und/oder die zweite Fördervorrichtung 12 durch eine Einstellvorrichtung 26 variiert werden. Auch hierdurch kann eine Anpassung an unterschiedliche Profile, insbesondere an Profile mit unterschiedlicher Dicke, vorgenommen werden.

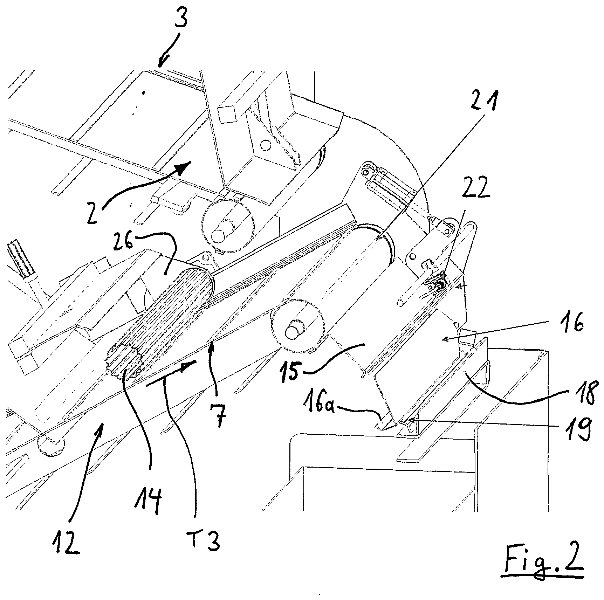

Ein vergrößerter Ausschnitt des Endbereichs aus Figur 1 ist in Figur 2 dargestellt. Insbesondere sind hier auch zwei Sensoren 21, 22 am Ende der zweiten Fördervorrichtung 12 und im Bereich der Rutsche 15 zu sehen, mit denen die Weiche 16 kontrolliert wird. Je nachdem, ob die sich nähernden Profile P vereinzelt sind oder nicht, und wenn ja, wie diese orientiert sind, wird eine der drei Positionen der Weiche 16 eingestellt, d.h. die Weiche 16 wird entsprechend um die Drehachse 17 gedreht.

Die Sensoren 21, 22 können unterschiedlich ausgebildet sein. Es kann sich um Lichtschranken handeln, es können aber auch Kameras bzw. 2D-Scanner oder dergleichen eingesetzt werden, um die Form etwaiger zusammenhängender Profil-Konglomerate oder um die Ausrichtung / Orientierung eines auf der Förderstrecke liegenden Profils näher herauszufinden, um eine Konturerkennung oder Ähnliches durchzuführen.

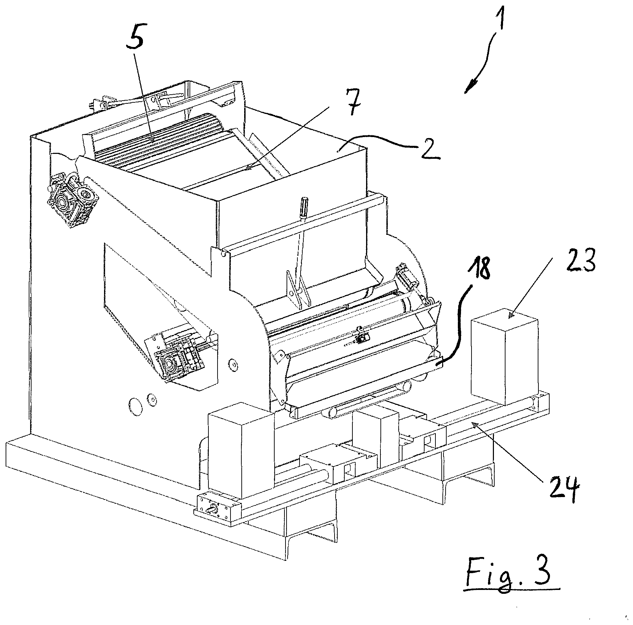

In Figur 3 wiederum ist der geschlossene Profilvereinzelner 1 mit Gehäuse gezeigt. Am Ende seiner Vereinzelungsstrecke ist ein Schneidwerkzeug 23, das über einen Lineartisch 24 verfahren werden kann, angeordnet, mit dem eine weitere Bearbeitung in Form eines Beschnitts durchgeführt werden kann.

### Bezugszeichenliste:

- 1: Profilvereinzelner
- 2: Bevorratungsbereich
- 3: erste Fördervorrichtung
- 4: erste Förderstrecke
- 5: Förderwalze
- 6: Boden der ersten Förderstrecke
- 7: Kratzboden
- 8: Mitnehmerleisten
- 9: Kette
- 10: Fallstrecke
- 11: Rutsche
- 12: zweite Fördervorrichtung
- 13: zweite Förderstrecke
- 14: Barrierevorrichtung
- 15: Rutsche
- 16: Weiche
- 16a: Auffangzarge
- 17: Drehachse der Weiche
- 18: erster Auffangbereich
- 19: Klemmhebel
- 20: zweiter Auffangbereich
- 21: Sensor
- 22: Sensor
- 23: Schneidwerkzeug
- 24: Lineartisch
- 25: Positionseinstellvorrichtung der Förderwalze
- 26: Positionseinstellvorrichtung der Barrierevorrichtung
- P: Profil
- T1: Transportrichtung
- T2: Transportrichtung
- T3: Transportrichtung

## Patentansprüche

1. Profilvereinzelner (1) zum Vereinzeln von Profilen (P), umfassend:
• eine erste Fördervorrichtung (3) zur Zuführung der Profile (P) im ungeordneten Zustand über eine erste Förderstrecke (4),
• eine Förderwalze (5) zum Auftrennen der Menge an zugeführten Profilen (P) in einzelne Profile (P),
• wobei die Förderwalze (5) in Transportrichtung (T1) der ersten Fördervorrichtung (3) nachgeschaltet ist.

2. Profilvereinzelner (1) nach einem der vorgenannten Ansprüche, **dadurch gekennzeichnet**, dassdie Förderwalze (5)
• eine zur ersten Fördervorrichtung (3) unterschiedliche Oberfläche aufweist und/oder
• so ausgebildet ist, dass sie sich an der Oberfläche mit einer zur Fördergeschwindigkeit der ersten Fördervorrichtung (5) unterschiedlicher Bahngeschwindigkeit bewegt, und/oder
• hinsichtlich ihrer Position relativ zur ersten Fördervorrichtung und/oder zur ersten Förderstrecke (4) einstellbar ist.

3. Profilvereinzelner (1) nach einem der vorgenannten Ansprüche, **dadurch gekennzeichnet**, dassdie Förderwalze (5)
• eine mit Zähnen versehene Oberfläche aufweist und/oder
• eine glatte Oberfläche aufweist.

4. Profilvereinzelner (1) nach einem der vorgenannten Ansprüche, **dadurch gekennzeichnet, dass** die Förderwalze (5) dazu ausgebildet ist, dass die Bahngeschwindigkeit an der Oberfläche der Förderwalze (5) größer ist als die Fördergeschwindigkeit der ersten Fördervorrichtung (3).

5. Profilvereinzelner (1) nach einem der vorgenannten Ansprüche, **dadurch gekennzeichnet, dass** die erste Förderstrecke (4) gekippt und/oder mit einstellbarem Winkel verkippbar ausgebildet ist, wobei die erste Förderstrecke (4) insbesondere so angeordnet ist, dass sie in Transportrichtung (T1) ansteigt.

6. Profilvereinzelner (1) nach einem der vorgenannten Ansprüche, **dadurch gekennzeichnet, dass** die erste Fördervorrichtung (3) als Kratzboden (7) und/oder als Förderband ausgebildet ist.

7. Profilvereinzelner (1) nach einem der vorgenannten Ansprüche, **dadurch gekennzeichnet, dass**
• der Förderwalze (5) eine Fallstrecke (10) nachgeschaltet ist und/oder dass
• der Förderwalze (5) und/oder der Fallstrecke (10) eine in Transportrichtung (T2) fallende Rutsche (11) der Förderwalze (5) nachgeschaltet ist, deren Oberfläche dazu ausgebildet ist, eine Bremswirkung auf die Bewegung des von der Förderwalze (5) fallenden Profils (P) auszuüben, und/oder
• sich die Transportrichtung (T2) nach der Förderwalze (5) umkehrt.

8. Profilvereinzelner (1) nach einem der vorgenannten Ansprüche, **dadurch gekennzeichnet, dass** eine zweite Fördervorrichtung (12) zur Weiterleitung der Profile (P) über eine zweite Förderstrecke (13) der Rutsche (11) nachgeschaltet ist, welche insbesondere gekippt und/oder mit einstellbarem Winkel verkippbar ausgebildet ist, wobei die zweite Förderstrecke (13) vorzugsweise so angeordnet ist, dass sie in Transportrichtung (T3) ansteigt.

9. Profilvereinzelner (1) nach einem der vorgenannten Ansprüche, **dadurch gekennzeichnet, dass** wenigstens eine Barrierevorrichtung (14) zur weiteren Vereinzelung als mechanischer Widerstand vorgesehen ist, welche als Durchlassöffnung und/oder als entgegen der Transportrichtung (T3) rotierende Bremsrolle ausgebildet ist, wobei die wenigstens eine Barrierevorrichtung (14) jeweils über der ersten und/oder der zweiten Förderstrecke (4, 13) angeordnet ist.

10. Profilvereinzelner (1) nach einem der vorgenannten Ansprüche, **dadurch gekennzeichnet, dass** eine Weiche (16) der zweiten Fördervorrichtung (12) nachgeschaltet ist, um je nach Grad der Verschachtelung die Profile (P) auszusortieren oder passieren zu lassen.

11. Profilvereinzelner (1) nach einem der vorgenannten Ansprüche, **dadurch gekennzeichnet, dass** die Weiche (16) im Querschnitt als L-förmiges Metall-Blechprofil ausgebildet ist, das auf einer Seite eine glatte Rutschfläche aufweist, über welche die Profile (P) mit der Schwerkraft entlangrutschen können, und auf der gegenüberliegenden Seite eine Auffangzarge (16a) zum Auffangen von Profilen (P) aufweist.

12. Profilvereinzelner (1) nach einem der vorgenannten Ansprüche, **dadurch gekennzeichnet, dass** die Weiche (16) drehbar um eine Achse (17) senkrecht zur Ebene, in der die L-Form vorliegt, gelagert ist.

13. Profilvereinzelner (1) nach einem der vorgenannten Ansprüche, **dadurch gekennzeichnet, dass** eine Kontrollvorrichtung zur rotativen Kontrolle der Weiche (16) vorgesehen ist, welche eine Sensorvorrichtung (21, 22) zur Detektion der Position und/oder Orientierung der Profile (P) umfasst, und dazu ausgebildet ist, je nachdem, wenn
• einzelne Profile (P) zur Weiche (16) transportiert werden, die Weiche (16) so zu positionieren, insbesondere zu drehen, dass die Profile (P) über die glatte Seite zu einem ersten Auffangbereich (18) gleiten, und/oder
• mehrere Profile (P) stark verhakt ineinander hängen, die Weiche (16) zu positionieren, insbesondere zu drehen, dass die Profile (P) gegen die glatte Seite prallen und zu einem zweiten Auffangbereich (20) gleiten, und/oder
• wenn Profile (P) nicht in einer vorgegebenen Orientierung liegen, die Weiche (16) so zu positionieren, insbesondere zu drehen, dass die Profile in die Auffangrinne (16a) rutschen, um durch Drehung der Weiche (16) gewendet zu werden.

14. Profilvereinzelner (1) nach einem der vorgenannten Ansprüche, **dadurch gekennzeichnet, dass** die Kontrollvorrichtung dazu ausgebildet ist, die Fördergeschwindigkeit der ersten und/oder zweiten Fördervorrichtung (3, 12) und/oder die Winkelgeschwindigkeit der Förderwalze (5), jeweils in Abhängigkeit von der Sensorvorrichtung zu kontrollieren:

15. Profilvereinzelner (1) nach einem der vorgenannten Ansprüche, **dadurch gekennzeichnet, dass** ein Greifer vorgesehen ist, um die Profile aus dem ersten Auffangbereich zu entnehmen und/oder eine Bearbeitungsstation (23) vorgesehen ist, um die Profile aus dem ersten Auffangbereich (18) zu bearbeiten.
